# EUROPEAN PATENT APPLICATION

(11) **EP 4 366 370 A1**
(43) Date of publication of application: **08.05.2024**
(21) Application number: 23207852.7
(22) Date of filing: 06.11.2023
(51) Int. Cl.: H04W 24/10, H04W 84/12

(54) **WIRELESS SENSING METHOD FOR REQUESTING PHASE REPORT FROM SENSING RESPONDER AND SENDING REQUESTED PHASE REPORT TO SENSING INITIATOR AND RELATED WIRELESS COMMUNICATION DEVICE**

(30) Priority: 07.11.2022 US 202263382552 P; 23.12.2022 US 202263476986 P; 13.01.2023 US 202363479748 P; 03.11.2023 US 202318501047
(71) Applicant: MediaTek Inc., Hsin-Chu 300 (TW)
(72) Inventor: TSAI, Tsung-Han, 30078 Hsinchu City (TW); LIU, Hsuan-Yu, 30078 Hsinchu City (TW); FENG, Shuling, San Jose, 95134 (US)
(74) Representative: Hoefer & Partner Patentanwälte mbB

(57) **Abstract**

One wireless sensing method includes: generating a measurement request frame (REQ), wherein the measurement request frame (REQ) is configured to carry indication information (PH_REQ) for phase report from a sensing responder (104), and sending the measurement request frame (REQ) to the sensing responder (104). Another wireless sensing method includes: generating a measurement report frame, wherein the measurement report frame is configured to carry phase information, and sending the measurement report frame to a sensing initiator (102).

## Description

### Field of the Invention

The present invention relates to wireless communications, and more particularly, to a wireless sensing (e.g., Wi-Fi sensing) method for requesting a phase report from a sensing responder and sending the requested phase report to a sensing initiator that requests the phase report and a related wireless communication device.

### Background of the Invention

With recent advancements, the wireless local area network (WLAN) or wireless fidelity (Wi-Fi) technology has been successfully utilized to realize sensing functionalities such as detection, localization, and recognition. However, the WLAN standards are developed mainly for the purpose of communications, and thus may not be able to meet the stringent sensing requirements. To resolve this issue, a new Task Group (TG), namely IEEE 802.11bf, has been established by the IEEE 802.11 working group, with the objective of creating a new amendment to the WLAN standard to provide advanced sensing requirements while minimizing the effect on communications.

Wireless sensing, also known as WLAN sensing, is a technology that uses wireless signals (e.g., Wi-Fi signals) to perform sensing tasks, by exploiting prevalent wireless infrastructures and ubiquitous wireless signals over surrounding environments. In particular, wireless radio waves can bounce, penetrate, and bend on the surface of objects during their propagation. By proper signal processing, the received wireless signals can be used to sense surrounding environments, detect obstructions, and interpret target movement. For example, vital signs detection is one of the wireless sensing applications for achieving remote diagnostics measurements. For example, using a millimetre wave (mmWave) Frequency Modulated Continuous Wave (FMCW) radar to monitor human vital signs is a well-known technique. IEEE 802.11bf supports the 60GHz band sensing by improving and modifying the directional multi-gigabit (DMG) implementation and the enhanced DMG (EDMG) implementation. The magnitude of range-Doppler map can be used to obtain information about speed and distance, but is unable to provide information about a small distance variation such as vibration resulting from breathing/heartbeat. Thus, there is a need for wireless sensing (e.g., Wi-Fi sensing) to support feedback of the phase of range-Doppler map for vital signs detection (e.g., breathing rate/heartbeat rate).

### Summary of the Invention

This in mind, the present invention aims at providing a wireless sensing (e.g., Wi-Fi sensing) method for requesting a phase report from a sensing responder and sending the requested phase report to a sensing initiator that requests the phase report and a related wireless communication device.

This is achieved by wireless sensing method and wireless communication device according to independent claims. The dependent claims pertain to corresponding further developments and improvements.

As will be seen more clearly from the detailed description following below, one claimed wireless sensing method includes: generating a measurement request frame, wherein the measurement request frame is configured to carry indication information for phase report from a sensing responder; and sending the measurement request frame to the sensing responder.

Another claimed wireless sensing method includes: generating a measurement report frame, wherein the measurement report frame is configured to carry phase information; and sending the measurement report frame to a sensing initiator.

One claimed wireless communication device for wireless sensing includes a wireless communication circuit and a control circuit. The control circuit is arranged to generate a measurement request frame, and instruct the wireless communication circuit to send the measurement request frame to a sensing responder, wherein the measurement request frame is configured to carry indication information for phase report from the sensing responder.

### Brief Description of the Drawings

In the following, the invention is further illustrated by way of example, taking reference to the accompanying drawings. Thereof
FIG. 1 is a diagram illustrating one wireless communication system that supports phase feedback (e.g., mmWave phase feedback) according to an embodiment of the present invention, and
FIG. 2 is a diagram illustrating another wireless communication system that supports phase feedback (e.g., mmWave phase feedback) according to an embodiment of the present invention.

### Detailed Description

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

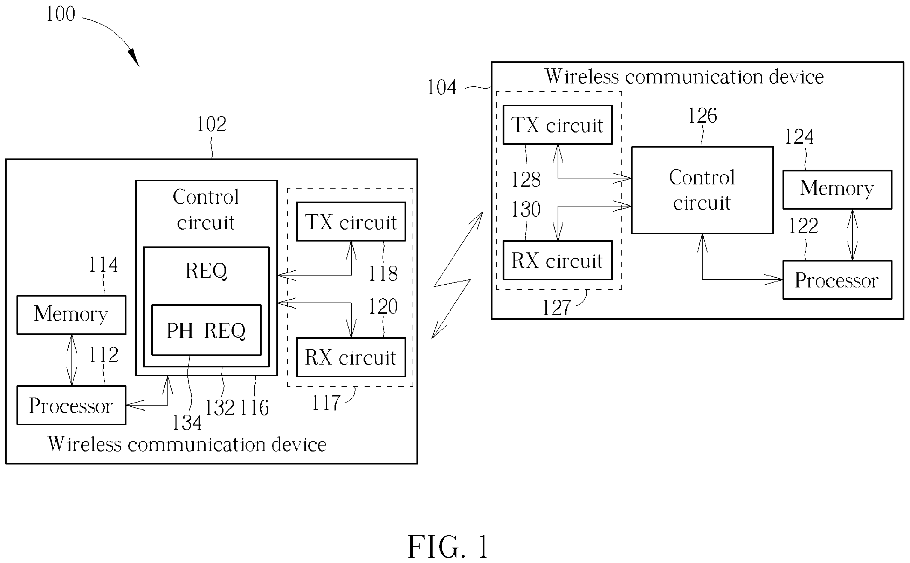

FIG. 1 is a diagram illustrating one wireless communication system that supports phase feedback (e.g., mmWave phase feedback) according to an embodiment of the present invention. The wireless communication system 100 includes a plurality of wireless communication devices 102 and 104. In this embodiment, the wireless communication system 100 may be any wireless system that supports wireless sensing, such as a Wi-Fi system that supports Wi-Fi sensing and includes an access point (AP) and a non-AP station (STA). For example, the wireless communication device 102 may be an AP, and the wireless communication device 104 may be a non-AP STA. For another example, the wireless communication device 102 may be a non-AP STA, and the wireless communication device 104 may be an AP. In this embodiment, both of the wireless communication devices 102 and 104 support wireless sensing (also known as WLAN sensing), and can use physical layer (PHY) and/or medium access control (MAC) layer to obtain measurements that might be useful to estimate features such as range, velocity, and motion of objects in an area of interest. Hence, one of the wireless communication devices 102 and 104 may act as a sensing initiator that initiates a sensing procedure (or DMG sensing procedure) by transmitting a request frame, and the other of the wireless communication devices 102 and 104 may act as a sensing responder that participates in the sensing procedure (or DMG sensing procedure) by responding to the sensing initiator. In the following, it is assumed that the wireless communication device 102 is a sensing initiator, and the wireless communication device 104 is a sensing responder.

For brevity and simplicity, only two wireless communication devices 102 and 104 are shown in FIG. 1. In practice, the wireless communication system 100 is allowed to have more than two wireless communication devices, including an AP and more than one non-AP STA in the same basic service set (BSS).

The wireless communication devices 102 and 104 may have the same or similar circuit structure. As shown in FIG. 1, the wireless communication device 102 includes a processor 112, a memory 114, a control circuit 116, and a wireless communication circuit 117, where the wireless communication circuit 117 includes a transmitter (TX) circuit 118 and a receiver (RX) circuit 120. The memory 114 is arranged to store a program code. The processor 112 is arranged to load and execute the program code to manage the wireless communication device 102. The control circuit 116 is arranged to control wireless communications with the wireless communication device 104. In a case where the wireless communication device 102 is an AP and the wireless communication device 104 is a non-AP, the control circuit 116 controls the TX circuit 118 of the wireless communication circuit 117 to deal with downlink (DL) traffic between AP and non-AP STA, and controls the RX circuit 120 of the wireless communication circuit 118 to deal with uplink (UL) traffic between AP and non-AP STA. In another case where the wireless communication device 102 is a non-AP STA and the wireless communication device 104 is an AP, the control circuit 116 controls the TX circuit 118 of the wireless communication circuit 117 to deal with UL traffic between AP and non-AP STA, and controls the RX circuit 120 of the wireless communication circuit 118 to deal with DL traffic between AP and non-AP STA.

The wireless communication device 104 includes a processor 122, a memory 124, a control circuit 126, and a wireless communication circuit 127, where the wireless communication circuit 127 includes a TX circuit 128 and an RX circuit 130. The memory 124 is arranged to store a program code. The processor 122 is arranged to load and execute the program code to manage the wireless communication device 104. The control circuit 126 is arranged to control wireless communications with the wireless communication device 102. In a case where the wireless communication device 102 is an AP and the wireless communication device 104 is a non-AP STA, the control circuit 126 controls the TX circuit 128 of the wireless communication circuit 127 to deal with UL traffic between AP and non-AP STA, and controls the RX circuit 130 of the wireless communication circuit 127 to deal with DL traffic between AP and non-AP STA. In another case where the wireless communication device 102 is a non-AP STA and the wireless communication device 104 is an AP, the control circuit 126 controls the TX circuit 128 of the wireless communication circuit 127 to deal with DL traffic between AP and non-AP STA, and controls the RX circuit 130 of the wireless communication circuit 127 to deal with UL traffic between AP and non-AP STA.

It should be noted that only the components pertinent to the present invention are illustrated in FIG. 1. In practice, the wireless communication device 102 may include additional components to achieve designated functions, and/or the wireless communication device 104 may include additional components to achieve designated functions.

In this embodiment, the wireless communication device 102 (which acts as the sensing initiator) supports the proposed phase report request signaling function. Hence, the control circuit 116 of the wireless communication device 102 is arranged to generate a measurement request frame (labeled by "REQ") 132, and instruct the wireless communication circuit 117 (particularly, TX circuit 118 of wireless communication circuit 117) to send the measurement request frame 132 to the wireless communication device 104 (which acts as the sensing responder). The measurement request frame 132 is configured to carry indication information PH_REQ for phase report from the sensing responder. Specifically, the indication information PH_REQ is signaled via the measurement request frame 132, and is used to indicate that the sensing initiator requests phase information to be included in a measurement report.

For example, the wireless communication device 102 (which acts as the sensing initiator) initiates a DMG sensing procedure, and the wireless communication device 104 (which acts as the sensing responder) participates in the DMG sensing procedure. The measurement request frame 132 includes a DMG Sensing Measurement Session element, and the indication information PH_REQ for phase report is carried in the DMG Sensing Measurement Session element. The DMG Sensing Measurement Session element may have a format as illustrate in the following table.

**Table 1**

| | Element ID | Length | | Element ID Extension | Measurement Session Control | | Report Type Control | LCI |
|---|---|---|---|---|---|---|---|---|
| Octets: | 1 | 1 | | 1 | 2 | | 1 | 0 or 16 |
| | | | | | | | | |

| | | | Peer Orientation | | | Optional Subelements | | |
|---|---|---|---|---|---|---|---|---|
| Octets: | | | 0-5 | | | variable | | |

In some embodiments of the present invention, the indication information PH_REQ for phase report is carried in the Report Type Control field in the DMG Sensing Measurement Session element. The Report Type Control field is used to indicate which type of report the sensing initiator expects from the sensing responder.

For example, the indication information PH_REQ for phase report is carried in a Report Type subfield in the Report Type Control field, where the Report Type subfield may be defined by the following table and may include options with phase, such as "DMG Sensing Image Direction Power and Phase" and "DMG Sensing Image Range-Direction Power and Phase".

**Table 2**

| Value | Description |
|---|---|
| 0 | No report |
| 1 | CSI |
| 2 | DMG Sensing Image Direction Power |
| 3 | DMG Sensing Image Range-Doppler Power |
| 4 | DMG Sensing Image Range-Direction Power |
| 5 | DMG Sensing Image Doppler-Direction Power |
| 6 | DMG Sensing Image Range-Doppler Direction Power |
| 7 | DMG Sensing Image Direction Power and Phase |
| 8 | DMG Sensing Image Range-Direction Power and Phase |
| 9 | Target |
| 10-255 | Reserved |

As illustrated in Table 1, the DMG Sensing Measurement Session element includes a plurality of fields. In an alternative signaling design, the indication information PH_REQ of phase report may be carried by a one-bit subfield included in one of the fields in the DMG Sensing Measurement Session element. For example, the indication information PH_REQ for phase report is carried in a one-bit Report Phase subfield in a Report Type Control field. The one-bit Report Phase subfield indicates that the sensing initiator requests phase information to be included in the report. The same objective of indicating that the sensing initiator requests phase information to be included in a measurement report is achieved.

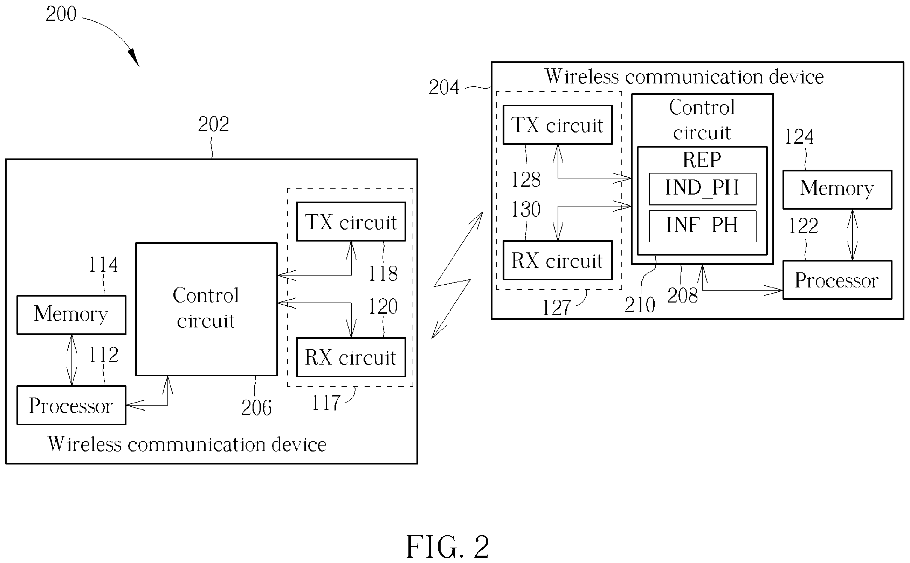

FIG. 2 is a diagram illustrating another wireless communication system that supports phase feedback (e.g., mmWave phase feedback) according to an embodiment of the present invention. The wireless communication system 200 includes a plurality of wireless communication devices 202 and 204. In this embodiment, the wireless communication system 200 may be any wireless system that supports wireless sensing, such as a Wi-Fi system that supports Wi-Fi sensing and includes an AP and a non-AP STA. For example, the wireless communication device 202 may be an AP, and the wireless communication device 204 may be a non-AP STA. For another example, the wireless communication device 202 may be a non-AP STA, and the wireless communication device 204 may be an AP. For brevity and simplicity, only two wireless communication devices 202 and 204 are shown in FIG. 2. In practice, the wireless communication system 200 is allowed to have more than two wireless communication devices, including an AP and more than one non-AP STA in the same BSS.

It should be noted that only the components pertinent to the present invention are illustrated in FIG. 2. In practice, the wireless communication device 202 may include additional components to achieve designated functions, and/or the wireless communication device 204 may include additional components to achieve designated functions.

In this embodiment, both of the wireless communication devices 202 and 204 support wireless sensing (also known as WLAN sensing), and can use PHY layer and/or MAC layer to obtain measurements that might be useful to estimate features such as range, velocity, and motion of objects in an area of interest. Hence, one of the wireless communication devices 202 and 204 may act as a sensing initiator that initiates a sensing procedure (or DMG sensing procedure) by transmitting a request frame, and the other of the wireless communication devices 202 and 204 may act as a sensing responder that participates in the sensing procedure (or DMG sensing procedure) by responding to the sensing initiator. In the following, it is assumed that the wireless communication device 202 is a sensing initiator, and the wireless communication device 204 is a sensing responder.

In this embodiment, the wireless communication device 204 (which acts as the sensing responder) supports the proposed phase report function. Hence, the control circuit 208 of the wireless communication device 204 is arranged to generate a measurement report frame (labeled by "REP") 210, and instruct the wireless communication circuit 127 (particularly, TX circuit 128 of wireless communication circuit 127) to send the measurement report frame 210 to the wireless communication device 202 (which acts as the sensing initiator). The measurement report frame 210 is configured to carry phase information INF_PH. For example, the phase information INF_PH is derived from wireless signal measurements (e.g., Wi-Fi signal measurements) performed at the wireless communication device 204. The control circuit 206 of the wireless communication device 202 may be implemented by the control circuit 116 shown in FIG. 1. Hence, the control circuit 206 of the wireless communication device 202 supports the proposed phase report request signaling function, and sends the measurement request frame 132 to the wireless communication device 204. In response to the indication information PH_REQ for phase report, the wireless communication device 204 sends the measurement report frame 210, including the requested phase information INF _PH, to the sensing initiator. In some embodiments of the present invention, the measurement request frame 132 may be further configured to carry an indicator IND_PH for indicating presence of the phase information INF PH.

For example, the wireless communication device 202 (which acts as the sensing initiator) initiates a DMG sensing procedure, and the wireless communication device 204 (which acts as the sensing responder) participates in the DMG sensing procedure. The measurement report frame 210 includes a DMG Sensing Report element, and the phase information INF_PH and the associated indicator IND_PH are carried in the DMG Sensing Report element. The DMG Sensing Report element may have a format as illustrate in the following table.

**Table 3**

| | Element ID | | Length | Element ID Extension | | DMG Measurement Session ID | Measure-ment Burst ID | Sensing Instance SN |
|---|---|---|---|---|---|---|---|---|
| Octets: | 1 | | 1 | 1 | | 1 | 1 | 1 |
| | | | | | | | | |

| | | DMG Sensing | | DMG Sensing | | DMG Sensing | | |
|---|---|---|---|---|---|---|---|---|
| | | Report Type | | Report Control | | Report | | |
| Octets: | | 1 | | 4 | | Variable | | |

In some embodiments of the present invention, the phase information INF_PH and the associated indicator IND_PH are carried in the DMG Sensing Report field in the DMG Sensing Report element. The DMG Sensing Report field may contain one or more subelements. For example, the phase report is a part of an image report. The DMG Sensing Report field includes a DMG Sensing Image Report Data subelement, and the phase information INF_PH and the associated indicator IND_PH are carried in the DMG Sensing Image Report Data subelement. The DMG Sensing Image Report Data subelement may have a format as illustrate in the following table.

**Table 4**

| | Subelement ID | | Length | Data Block SN | | Axis Present | Reflection Power Bias | | Reflection Power Slope |
|---|---|---|---|---|---|---|---|---|---|
| Octets: | 1 | | 1 | 1 | | 1 | 1 | | 1 |
| | | | | | | | | | |

| | | Number of Reflection Fields | | | Reflection Fields | | | Reserved | |
|---|---|---|---|---|---|---|---|---|---|
| Octets: | | 3 | | | variable | | | Variable | |

In some embodiments of the present invention, the phase information INF_PH is carried in the Reflection Fields field, and the indicator IND_PH is carried in the Axis Present field. The Axis Present field may have a format as illustrate in the following table.

**Table 5**

| | Range Axis Present | Doppler Axis Present | Receiver Beam Index Present | Transmitter Beam Index Present | Phase Present | Receive Azimuth Present | Receive Elevation Present | Receive Direction Reference |
|---|---|---|---|---|---|---|---|---|
| Bits: | 1 | 1 | 1 | 1 | 1 | 1 | 1 | 1 |

The Phase Present field in the Axis Present field represents the indicator IND_PH, and can be set to indicate the presence of phase information in the Reflection Fields field.

The Reflection Fields field may contain multiple Reflection fields. All Reflection fields within a Reflection Fields field have the same format, which can be derived from the Axis Present field. The reflection field format for 2 axes, the reflection field format for 3 axes, the reflection field format for 4 axes, and the reflection field format for 5 axes are illustrated in the following tables, respectively.

**Table 6:**

| | | | |
|---|---|---|---|
| Axis #1 | Axis #2 | Reflection Power | Reflection Phase |

**Table 7**

| | | | | |
|---|---|---|---|---|
| Axis #1 | Axis #2 | Axis #3 | Reflection Power | Reflection Phase |

**Table 8**

| | | | | | |
|---|---|---|---|---|---|
| Axis #1 | Axis #2 | Axis #3 | Axis #4 | Reflection Power | Reflection Phase |

**Table 9**

| | | | | | | |
|---|---|---|---|---|---|---|
| Axis #1 | Axis #2 | Axis #3 | Axis #4 | Axis #5 | Reflection Power | Reflection Phase |

The Reflection Phase field in the Reflection field represents the phase information INF_PH reported by the sensing responder.

It should be noted that "DMG Sensing Report" may be used to carry a report of any DMG-related sensing procedure. For example, an EDMG device is also a DMG device. Hence, the proposed phase feedback design can be applied to DMG sensing reporting and EDMG sensing reporting.

## Claims

1. A wireless sensing method **characterized by**:
generating a measurement request frame (REQ), wherein the measurement request frame (REQ) is configured to carry indication information (PH_REQ) for phase report from a sensing responder (104, 204); and
sending the measurement request frame (REQ) to the sensing responder (104, 204).

2. The wireless sensing method of claim 1, **characterized in that** the measurement request frame (REQ) comprises a directional multi-gigabit, hereinafter referred to as DMG, Sensing Measurement Session element, and the indication information (PH_REQ) for phase report is carried in the DMG Sensing Measurement Session element.

3. The wireless sensing method of claim 2, **characterized in that** the DMG Sensing Measurement Session element comprises a Report Type Control field, the Report Type Control field comprises a Report Type subfield, and the indication information (PH_REQ) for phase report is carried in the Report Type subfield.

4. The wireless sensing method of claim 2, **characterized in that** the DMG Sensing Measurement Session element comprises a plurality of fields, and the indication information (PH_REQ) for phase report is carried by a one-bit subfield included in one of the plurality of fields.

5. A wireless sensing method **characterized by**:
generating a measurement report frame (REP), wherein the measurement report frame (REP) is configured to carry phase information (INF_PH); and
sending the measurement report frame (REP) to a sensing initiator (102, 202).

6. The wireless sensing method of claim 5, **characterized in that** the measurement report frame (REP) comprises a directional multi-gigabit, hereinafter referred to as DMG, Sensing Report element, and the phase information (INF_PH) is carried in the DMG Sensing Report element.

7. The wireless sensing method of claim 6, **characterized in that** the DMG Sensing Report element comprises a DMG Sensing Report field, and the phase information (INF_PH) is carried in the DMG Sensing Report field.

8. The wireless sensing method of claim 7, **characterized in that** the DMG Sensing Report field comprises a DMG Sensing Image Report Data subelement, the DMG Sensing Image Report Data subelement comprises a Reflection Fields field, the Reflection Fields field comprises a Reflection field with a Reflection Phase field, and the phase information (INF_PH) is carried in the Reflection Phase field.

9. The wireless sensing method of claim 5, **characterized in that** the measurement report frame (REP) is further configured to carry an indicator (IND_PH) for indicating presence of the phase information (INF_PH).

10. The wireless sensing method of claim 9, **characterized in that** the measurement report frame (REP) comprises a directional multi-gigabit, hereinafter referred to as DMG, Sensing Report element, and the indicator (IND _PH) is carried in the DMG Sensing Report element.

11. The wireless sensing method of claim 10, **characterized in that** the DMG Sensing Report element comprises a DMG Sensing Report field, and the indicator (IND _PH) is carried in the DMG Sensing Report field.

12. The wireless sensing method of claim 11, **characterized in that** the DMG Sensing Report field comprises a DMG Sensing Image Report Data subelement, the DMG Sensing Image Report Data subelement comprises an Axis Present field, the Axis Present field comprises a Phase Present field, and the indicator (IND _PH) is carried in the Phase Present field.

13. The wireless sensing method of claim 5, **characterized in that** the measurement report frame is sent during a directional multi-gigabit sensing procedure or a Wi-Fi sensing procedure.

14. A wireless communication device (102, 202) for wireless sensing, **characterized by**:
a wireless communication circuit (117); and
a control circuit (116, 206), arranged to generate a measurement request frame (REQ), and instruct the wireless communication circuit (117) to send the measurement request frame (REQ) to a sensing responder (104, 204), wherein the measurement request frame (REQ) is configured to carry indication information (PH_REQ) for phase report from the sensing responder (104, 204).

15. The wireless sensing method of claim 1 or the wireless communication device (102, 202) of claim 14, **characterized in that** the measurement request frame (REQ) is sent during a directional multi-gigabit sensing procedure or a Wi-Fi sensing procedure.
